# EUROPEAN PATENT SPECIFICATION

(11) **EP 3 941 762 B1**
(45) Date of publication and mention of the grant of the patent: **12.04.2023**
(21) Application number: 20712024.7
(22) Date of filing: 24.02.2020
(51) Int. Cl.: B60C 11/03, B60C 11/04, B60C 11/12

(54) **TYRE FOR VEHICLE WHEELS WITH NOTCHED GRIPPING ELEMENTS**
REIFEN MIT EINGESCHNITTENEN GRIP-ELEMENTEN FÜR FAHRZEUGRÄDER
PNEUS AVEC ÉLÉMENTS D'ADHÉRENCE INCISÉS POUR ROUES DE VÉHICULES

(30) Priority: 19.03.2019 IT 201900003993
(43) Date of publication of application: 26.01.2022
(73) Proprietor: Prometeon Tyre Group S.r.l., 20126 Milano (IT)
(72) Inventor: PIZZORNO, Tommaso, 20126 Milano (IT)
(74) Representative: Tansini, Elio Fabrizio
(86) International application number: PCT/IB2020/051526
(87) International publication number: WO 2020/188375

(56) References cited:
- DE-A1-102009 044 547
- JP-A- 2016 166 014
- US-A- 5 322 107
- US-A1- 2010 307 650

## Description

### FIELD OF THE INVENTION

The present invention relates to a tyre for vehicle wheels provided with notched gripping elements.

In particular, the present invention applies to tyres suitable for use on a non-dry and/or poorly adhering road, for example due to the presence of water, snow, ice or mud.

Preferably, the present invention applies to tyres for heavy vehicle wheels (freight and/or people transport).

Heavy duty tyres are required to combine features of durability, low noise, driving comfort, reduced fuel consumption and road grip on all roads.

In general, different categories of tyres are distinguished according to the use they are intended for; for example, there are traction tyres, directional tires and non-traction tyres.

Typically, traction tyres have a design with blocks and are mounted on the driving axle; directional tyres have a striped design and are mainly mounted on the steering axle; non-traction tyres have a mainly striped design, cannot be used on the steering axle and are mainly used on trailers.

Regardless of the category to which they belong, the tyres are required to grip the road sufficiently: traction tyres are configured to transmit the drive torque to the ground, the directional ones to allow you to change the direction of travel of the vehicle and therefore oppose the centrifugal force, the braking non-traction ones to transmit the braking torque to the ground.

Typically, in some vehicles, the traction tyres may also be directional.

For example, heavy load vehicles for passenger transport may be equipped with tyres provided with a directional design suitable for the steering axle also on the drive axle. Typically, a traction tyre with blocks is used in cases where high traction is required. tyres with circumferential grooves are also typically braking. Typically, the design of a tread of a traction tyre has circumferential grooves (more or less deviated), which cross transversal grooves generating well-defined areas of tread called "blocks".

On the other hand, in general, the design of a tread of a non-traction tyre is not provided with transversal grooves and therefore has a plurality of "ribs" separated from the circumferential grooves.

A tread pattern allows offering traction through the contact pressures of the edges of the blocks on the ground which, like "claws", cling to the ground.

However during rolling, the alternation between block (which is a contact area) and groove (which is a non-contact area) generates vibrations which, transmitted to the air, cause noise.

Furthermore, the vibrations propagate through the tire structure and, passing through the suspension system, reach the steering wheel, thus reducing the comfort for the driver.

A traction tyre therefore has conflicting needs: to offer a good grip on the ground, a high number of blocks is advantageous while, on the other hand, to offer high comfort and low noise, the number of blocks should be as low as possible.

Examples of tyres provided with notches or openings made in the ribs and/or blocks are disclosed in documents EP2563604, FR2530194, WO2016100032. Further Examples of known tyres with notched gripping elements are derivable from JP 2016166014 A, DE 10 2009 044547 A1, US 2010/307650 A1, and US 5 922107 A.

### SUMMARY OF THE INVENTION

The Applicant has identified a configuration of a gripping element which combines the aforementioned needs.

In general, the invention relates to a tyre for vehicle wheels, according to claim 1

Preferably, the closed line has a circular or elliptical or ovoid shape.

Preferably, the closed line has a loboidal shape.

Preferably, the closed line defines a first extreme lobe and a second extreme lobe and an intermediate taper.

Preferably, the intermediate taper interconnects the first extreme lobe and the second extreme lobe.

Preferably, the tread portions are located inside the notch.

Preferably, the tread portions are circumscribed by the notch. Preferably, the notch has an outer contour and the tread portion is separate from the outer contour of the notch.

Preferably, the gripping element comprises one or more tread portions located inside the notch.

Preferably, the notch has an outer contour and the tread portion is separate from the outer contour of the notch.

Preferably, the tread portion has a cylindrical or truncated-conical shape.

Preferably, the tread portion has a shape corresponding to the shape of said closed line.

Preferably, the hole or depression are deeper than a notch bottom. Preferably, the inclination of the first extreme zone is less than the inclination of the second extreme zone.

Preferably, the first extreme zone is located at a greater depth than the second extreme zone. Preferably the gripping element comprises a plurality of tread portions adjacent to each other and located inside the notch, in particular two or three or four tread portions.

Preferably, the plurality of tread portions defines an outline and the outline corresponds to the shape of the closed line.

Preferably, the plurality of tread portions comprises two tread portions having a cylindrical or truncated-conical shape.

Preferably, a first plurality of gripping elements is formed on a first rib. Preferably, the gripping elements of the first plurality are equal to each other.

Preferably, the gripping elements of the first plurality have the same first orientation.

Preferably, a second plurality of gripping elements is formed on a second rib.

Preferably, the gripping elements of the second plurality are equal to each other.

Preferably, the gripping elements of the second plurality have the same second orientation.

Preferably, the first orientation of the gripping elements of the first plurality is different from the second orientation of the gripping elements of the second plurality.

The gripping element may be positioned in various points of the tread and, preferably, it is positioned in a plurality of points of the same tire tread.

In particular, the gripping element may be positioned in a rib or in a block.

Preferably, the gripping element may be delimited by a notch having at least partially curvilinear closed line development and comprises one or more tread portions.

Preferably, inside the notch there is at least a portion of tread in relief with respect to the bottom of the notch and separated from the outer contour of the notch.

Preferably, the notch has a curved shape shaped as a closed line comprising circular or elliptical or rectilinear sections and/or a combination of said sections.

Preferably, the notch has a loboidal pattern.

Preferably, the notch has a first extreme lobe and a second extreme lobe connected by an intermediate taper.

Advantageously, a tread portion inside the notch has a cylindrical or truncated-conical shape.

The tread portion inside the notch may have a shape corresponding to the shape of the closed line of the notch.

Advantageously, a tread portion inside the notch has a hole or a hollow inside.

The hole or depression is preferably deeper than said notch bottom. Preferably, the hole has a first extreme zone of a conical shape and a second extreme zone of a truncated-conical shape.

Preferably, the first extreme zone and the second extreme zone have different inclinations with respect to the axis of the hole.

Preferably, the inclination of the first extreme zone is less than the inclination of the second extreme zone.

According to some second advantageous embodiments, a plurality of tread portions adjacent to each other, in particular two or three or four tread portions, are located inside the notch. In this case, preferably, the plurality of tread portions defines an outline which corresponds to the shape of the closed line of the notch.

According to a particularly advantageous embodiment, the plurality of tread portions comprises two tread portions having a cylindrical or truncated-conical shape.

The present invention is particularly advantageous if the tread has circumferential grooves where, in the absence of transverse grooves, traction is advantageously improved by using circular and/or loboidal holes and notches.

### BRIEF DESCRIPTION OF THE DRAWINGS

Further features and advantages of the invention are illustrated below with reference to embodiments shown by way of non-limiting example in the accompanying figures, in which:
Fig. 1 shows an overall perspective view of an exemplary embodiment of a tyre for vehicle wheels according to the present invention,
Fig. 2 shows an enlarged view of a part of Fig.1,
Fig. 3 show a top view (Fig. 3A) and a sectional view (Fig. 3B) of a first
example of a gripping element formed in the tyre of Fig. 1,
Fig. 4 shows a top view of a second example of a gripping element formed in the tyre of Fig. 1,
Fig. 5 show a top view (Fig. 5A) and a sectional view (Fig. 5B) of the second example of a gripping element with dimensional indications,
Figures 6 to 13 show examples of tire treads according to the present invention.

### DETAILED DESCRIPTION OF THE INVENTION

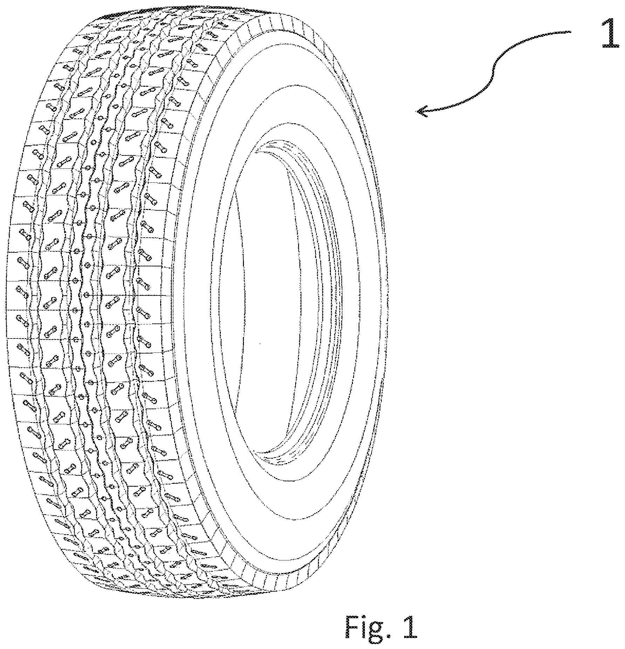

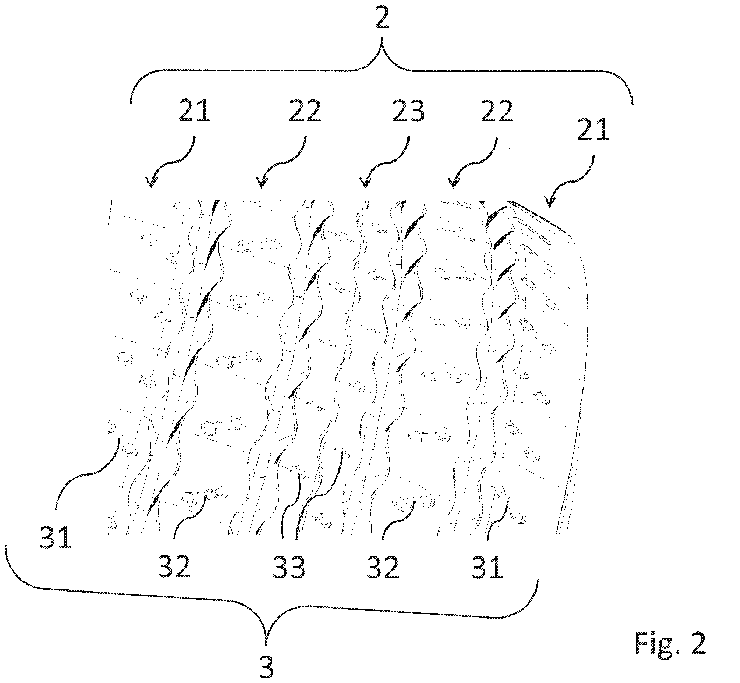

In Fig. 1 and Fig. 2, an exemplary embodiment of a tyre 1 according to the present invention can be seen.

The tyre 1 comprises a tread band with a plurality of circumferential ribs 2.

In particular but without limitation, the tyre 1 comprises two ribs 21 on the edges of the band, a rib 23 in the centre of the band, and two ribs 22 in intermediate positions between the ribs 21 and the rib 23.

Between two consecutive ribs there is a circumferential groove, in particular a deviating groove. Furthermore, the central rib 23 has a central deviating groove.

Exemplary embodiments of a tyre according to the present invention alternative to that of Fig. 1 and Fig. 2 may have different configurations; in particular a different number of ribs and/or blocks.

As already anticipated, the core of the present invention is the presence of at least one particular "gripping element" on the tread, in particular on a rib or on a block.

In general, there may be a plurality of gripping elements variously arranged and configured.

For example, with reference to tyre 1 of the example of Fig. 1 and Fig.

### 2, there are multiple gripping elements 3.

On each rib 21 there is a plurality of gripping elements 31 arranged for example on a circumference of the tyre.

On each rib 22 there is a plurality of gripping elements 32 arranged for example on a circumference of the tyre.

On the rib 23 there are two pluralities of gripping elements 33 arranged for example on two circumferences of the tyre on a first side and a second side of the deviating groove.

The gripping elements according to the present invention occupy tread surfaces preferably comprised between about 30 mm² and about 1800 mm², more preferably between about 100 mm² and about 600 mm², according to a specific embodiment of about 250 mm².

The gripping elements may have a relatively large perimeter, preferably the perimeter of one of these may be between about 10 mm and about 450 mm, more preferably between about 30 mm and about 150 mm, even more preferably between about 60 and about 100 mm, according to a specific embodiment of about 73 mm.

The gripping element of an embodiment of the tyre according to the present invention is delimited by a notch having at least partially curvilinear closed line development and comprises one or more tread portions.

Inside the notch there is at least a portion of tread in relief with respect to the bottom of the notch and separated from the outer contour 41 of the notch.

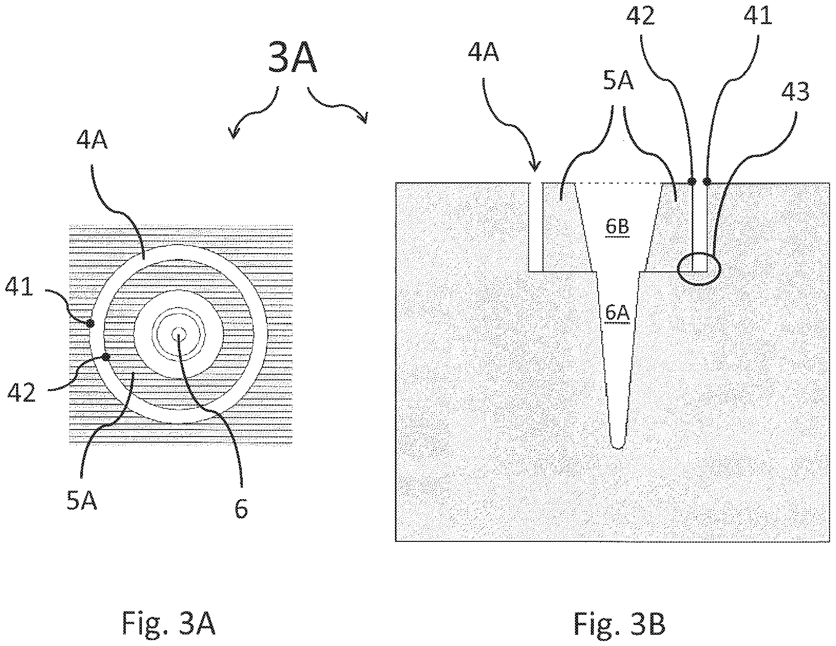

With reference to the gripping element 3A of figures 3, there is a notch 4A and a tread portion 5A.

In Fig. 3A, it can be seen that the notch 4A has an outer contour 41 and an inner contour 42 which, in the example of the figure, have the same shape (alternatively they could have somewhat different shapes). Furthermore, in Fig. 3B it can be seen that the notch 4A (preferably but not necessarily uniformly deep) has a bottom 43 which is joined to the contours 41 and 42 by walls which, in the example of the figure, are both vertical (alternatively one or both could be oblique).

In Fig. 3A and Fig. 3B, it can be seen that the tread portion 5A is in relief with respect to the bottom 43 and separated from the outer contour 41. As shown in Fig. 3B, it is preferable that the relief of the tread portion 5A is such that its upper surface (i.e. the one furthest from the tire axis) is aligned with the surface of the tread that surrounds the gripping element 3A.

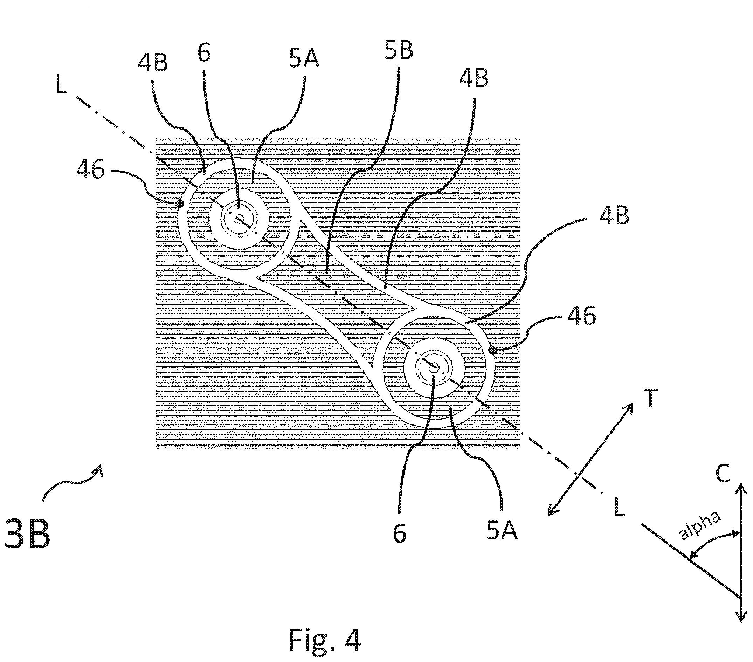

With reference to the gripping element 3B of Fig. 4, there is a notch 4B and three tread portions, two of which are indicated by the reference 5A and one of these is indicated by the reference 5B.

For the gripping element 3B of Fig. 4, similar considerations to those made previously in relation to the gripping element 3A of figures 3 apply.

The three tread portions 5A, 5B, 5A are raised with respect to the bottom of the notch and separated from the outer contour 46 of the notch 4B; it is preferable but not necessary that the relief of the three compound portions be of the same size; it is preferable but not necessary that the relief be such that the upper surface (i.e. the one furthest from the tire axis) is aligned with the surface of the tread which surrounds the gripping element 3B.

Two of the tread portions of Fig. 4 are identical to the tread portion of figures 3 and therefore the same reference 5A has been used.

It should be noted that the particular configuration of Fig. 4 is symmetrical with respect to its longitudinal axis "L-L", that is to say to a longitudinal axis of the gripping element.

"T" indicates a direction perpendicular to the axis of the gripping element; "C" indicates a circumferential direction of the tyre, which can also be called a longitudinal direction of the tyre.

According to some embodiments (see for example figures 3), the closed line which constitutes the shape of a notch according to the present invention may be circular (such as for example that of the notch 4A) or elliptical or ovoid.

According to some embodiments (see for example Fig. 4), the closed line which constitutes the pattern of a notch formed in a tyre according to the present invention may be loboidal.

For example, the line relating to the notch 4B has a first extreme lobe and a second extreme lobe and an intermediate taper which, in particular, connects the two lobes; the two lobes of the notch 4B are in particular the same.

In general, the number of lobes may be greater than one (for example two or three or four or ...) and/or the lobes may be the same or different from each other.

It should be noted that, due to the notch, the inner tread portion or the inner tread portions have a relative movement with respect to the tread during the rolling of the tyre, locally increasing the specific pressure.

It is understood that the (outer and inner) contours of the perimeter notch (a little separated and a little spaced) are effective for the adhesion both in the longitudinal direction (i.e. circumferential) and in the transverse direction. The greater the length of the contours of the notch, the greater the gripping effect.

The tread portions delimited by the notches act like small blocks, and therefore the alternation of full and empty spaces generates a slight effect of increasing the pressure on the ground located on the edges of the tread portions.

As will be better explained hereinafter, if the distance between the (outer and inner) contours of the perimeter notch is not excessive, noise and comfort are not affected.

Reducing the width of the notch reduces the mobility of the cover in rolling and further reduces if the notches do not lead to the neighbouring notches or ribs. This effect is evident especially if the (outer and inner) contours of the perimeter notch are arranged at the same level.

For example, the distance between the outer and inner contours of the perimeter notch may preferably be between about 0.2 mm and about 4.0 mm, more preferably between about 0.5 mm and about 1.5 mm, according to a specific embodiment of about 0.8 mm.

As is the case for both the example of figures 3 and the example of Fig. 4, a tread portion, in particular the portion 5A, may have a cylindrical shape (in particular internally hollow as in the figures) or truncated-conical; in general, the section of these solid figures may be circular (as in the figures), elliptical or ovoid.

The tread portion 5A advantageously has a hole 6 inside it (or alternatively a hollow), in particular a blind hole.

In particular, the hole is advantageous during the production step (in particular, for vulcanisation) of the tyre since it can receive a hot tip and thus improve the diffusion of heat by making the vulcanisation level of the compound parts furthest from heat sources uniform and when using the tyre, because it allows dissipating the heat generated by the movement of the belts inside the tyre and by the tread compound.

This advantage is even greater if the hole 6 (or hollow) is deeper than the bottom of the notch (as in Fig. 3B).

In particular, the hole 6 has a first (deep) extreme zone 6A of a conical shape (specifically with a rounded tip) and a second (superficial) extreme zone 6B of a truncated-conical shape.

The inclination of the walls of the hole 6 is advantageous because, if a small stone enters the hole during the movement of a vehicle, it would be expelled during the rotation of the tire and not retained inside.

It should be noted that the surface edge of the hole also advantageously contributes to the grip of the tyre.

Preferably, the first extreme zone 6A and the second extreme zone 6B have different inclinations with respect to the axis of the hole 6; in particular, the inclination of the first extreme zone 6A is less than the inclination of the second extreme zone 6B. Advantageously, the angle between the walls of the zone 6B is greater than that of the zone 6A since the zone 6B is more critical for the entrapment of the stones.

Preferably, between the first extreme zone 6A and the second extreme zone 6B, the hole 6 has a step, i.e. a sharp change in its diameter, which is reduced between the second extreme zone 6B and the first extreme zone 6A. Advantageously, this step acts as a further barrier against the entrapment of the stones in the hole 6.

As can be understood from what has been explained above, an important aspect of the gripping element is the relationship between the shape of the closed line relative to the perimeter notch and the shape of the tread portion or the tread portions inside; in fact, this relationship determines the width of the notch and indirectly affects noise and comfort.

In general, the larger the notch size and the greater the noise generation, varying the dimensions and distances of the notches will change the frequency of the generated noise.

In the example of figures 3 and as seen in Fig. 3A, the tread portion 5A has a shape corresponding to the shape of the closed line of the notch 4A.

In the example of Fig. 4, inside the notch 4B there is a plurality of tread portions adjacent to each other (with possible separating grooves, as shown in Fig. 4).

Preferably, there are two or three or four tread portions. Specifically in the example of Fig. 4 there are two tread portions 5A and one tread portion 5B. The tread portion 5A has a cylindrical shape (alternatively, it could also be truncated-conical) and has a circular section (alternatively, it could have an elliptical or ovoid section). The tread portion 5B has a substantially prismatic shape and connects the tread portion 5A; one of the functions of the tread portion 5B is to prevent the outer contour 46 of the notch 4B from deforming considerably and abruptly in the central area during tyre rolling (i.e. avoiding excessive tread deformations).

Advantageously, the tread portion 5B therefore acts as a "damper" and can contribute to the gripping performance.

As can be seen in Fig. 4, the plurality of tread portions 5A, 5B, 5A defines a shape which corresponds to the shape of the closed line of the notch 4B, and also of the outer contour 46 of the notch 4B.

It should be noted that, in the example of Fig. 4, the edges that contribute to the grip are: the edge of the outer contour 46 of the notch 4B, the entire perimeter edge of the tread portions 5A, the entire perimeter edge of the tread portion 5B, the surface edges of the holes 6 of the tread portions 5A.

For example, in the case of a specific embodiment configured as in Fig. 4, in an area of about 250 mm² a total edge length of about 200 mm was obtained.

Advantageously, if the inner tread portions are at the same level as the surrounding tread, the wear of the gripping element is equal to the wear of the surrounding tread and therefore the gripping, noise and comfort characteristics remain constant during the life of the tyre; moreover, the tyre offers at the beginning of its life and maintains the same qualities of rolling resistance.

An important aspect of the gripping element according to the present invention is the sizing of its parts.

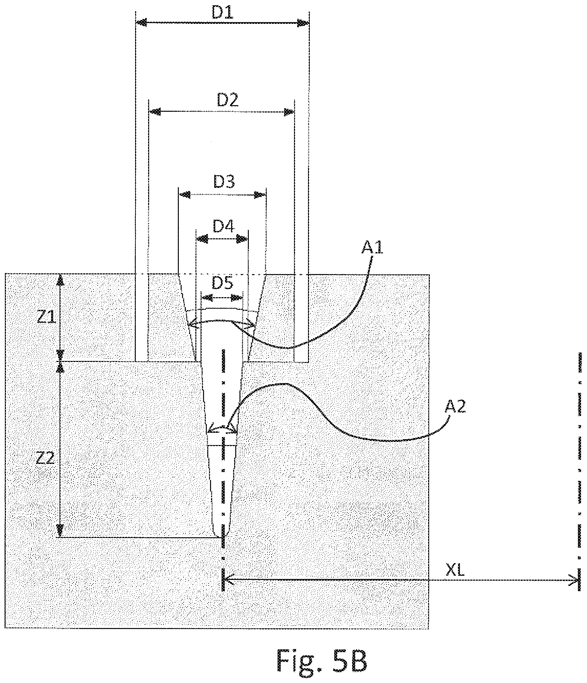

With particular reference to Fig. 5B, indications will be provided about possible sizing of the tread portion 5A and related elements since this tread portion is used both in the embodiment example of figures 3 and in the embodiment example of figure 4.

It should be noted that these possible sizing are, at least in part, independent of each other.

Furthermore, it is to be noted that these possible sizing are also useful for tread portions having a similar configuration.

D1 indicates the surface diameter of the outer contour 41: preferably between about 30 mm and about 5 mm, even more preferably between about 20 mm and about 7 mm, in a specific embodiment it is equal to about 10 mm.

D2 indicates the surface diameter of the inner contour 42: preferably between about 30 mm and about 4 mm, even more preferably between about 20 mm and about 5 mm, in a specific embodiment it is equal to about 8.4 mm.

In particular, the difference between D1 and D2 defines the separation described above between the tread portion 5A and the outer contour 41.

D3 indicates a surface diameter of the hole 6, in particular of the second extreme zone 6B: preferably between about 20 mm and about 2 mm, even more preferably between about 10 mm and about 3 mm, in a specific embodiment it is equal to about 5 mm.

D4 indicates a first inner diameter of the hole 6: preferably between about 20 mm and about 2 mm, even more preferably between about 8 mm and about 2 mm, in a specific embodiment it is equal to about 3 mm.

D5 indicates a second inner diameter of the hole 6: preferably between about 20 mm and about 2 mm, even more preferably between about 8 mm and about 2 mm, in a specific embodiment it is equal to about 2.4 mm.

In particular, the first inner diameter D4 and the second inner diameter D5 are measured at the border between the first extreme zone 6A and the second extreme zone 6B and their difference determines the extent of the step previously described.

Z1 indicates the depth of the second extreme zone 6B of the hole 6, preferably equal to the depth of the notch 4A: preferably between about 10 mm and about 3 mm, even more preferably between about 8 mm and about 3 mm, in a specific embodiment it is equal to about 5 mm.

Z2 indicates the depth of the first extreme zone 6A of the hole 6: preferably between about 20 mm and about 6 mm, even more preferably between about 16 mm and about 6 mm, in a specific embodiment it is equal to about 10 mm.

Alternatively, the value of Z2 may preferably be between about 400% and about 120% at the value of Z1, even more preferably between about 320% and about 120%, in a specific embodiment it is equal to about 200%.

A1 indicates the opening angle of the second extreme zone 6B of the hole 6: preferably between about 40° and about 10°, even more preferably between about 25° and about 20°, in a specific embodiment it is equal to about 23°.

A2 indicates the opening angle of the first extreme zone 6A of the hole 6: preferably between about 20° and about 3°, even more preferably between about 15° and about 5°, in a specific embodiment it is equal to about 9°.

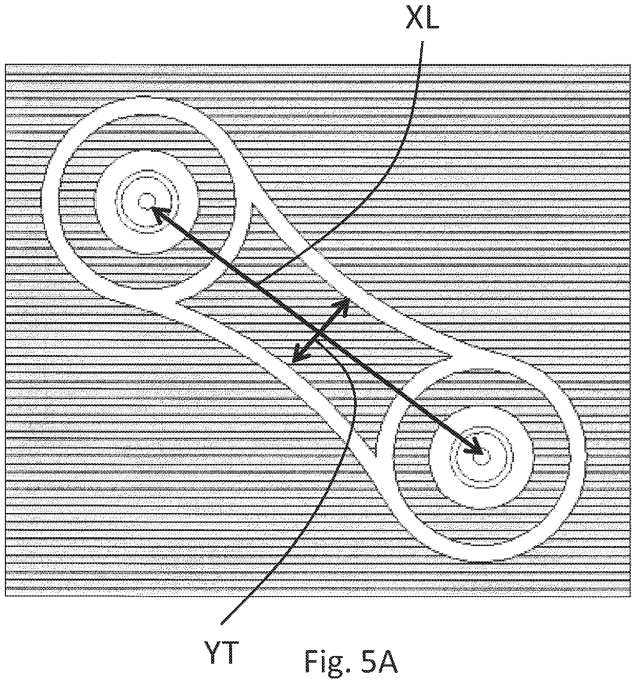

With particular reference to Fig. 5A indications will be provided about possible further sizing of the gripping element.

XL indicates the distance between the development axes of the two tread portions of a single gripping element, in particular measured along the direction indicated by the axis L-L of Fig. 4. Preferably, XL is between about 60 mm and about 10 mm, even more preferably between about 45 mm and about 15 mm, in a specific embodiment it is equal to about 20 mm.

YT indicates the width of a narrowing point of the taper between the two lobes in the configuration described above in particular measured perpendicular to the direction indicated by the axis L-L of Fig. 4. Preferably, YT is between about 15 mm and about 3 mm, even more preferably between about 9 mm and about 4 mm, in a specific embodiment it is equal to about 5.8 mm.

Alternatively, the value of YT may preferably be between about 30% and about 90% of the value of a width or diameter of the lobes, even more preferably between about 50% and about 70%, in a specific embodiment it is equal to about 58%.

With the aid of Fig. 2, possible uses of the gripping elements according to the present invention in tyres will be explained. The figure shows several pluralities of gripping elements which are, in particular, aligned on different circumferences of the tyre.

Alternatively, the gripping elements of a plurality could for example be located inside a circumferential strip of the tyre and alternatively arranged on the right and left of a central circumference preferably at a distance between about 0 mm and about 60 mm from the circumference itself. The gripping elements of a plurality may be spaced apart from each other on a circumference of the tyre preferably at a distance of between about 10 mm and about 120 mm.

For example, a first plurality of gripping elements 32 is formed on a first rib 22. The elements 32 are in particular equal to each other. The elements 32 in particular have a shape with two lobes. The elements 32 in particular have the same first orientation with respect to a circumferential direction of the tyre (indicated with "C" in Fig. 4), preferably an orientation of an "alpha" angle (see Fig. 4) between about 0 and about 90 degrees, more preferably between about 30 and about 60 degrees, according to a specific embodiment example of about 52°.

In particular, a larger "alpha" angle favours the lateral grip of the tyres, while a smaller "alpha" angle favours the longitudinal grip of the tyres.

For example, a second plurality of gripping elements 31 or 33 is formed on a second rib 21 or 23. In the example of Fig. 2, there are gripping elements both on the rib 21 and on the rib 23; in particular on the rib 23 there are two pluralities of gripping elements.

The gripping elements 31 are in particular equal to each other. The gripping elements 33 are in particular equal to each other. The elements 33 have a circular shape in particular. The elements 31 in particular have a shape with two lobes. The elements 31 in particular have the same second orientation with respect to a circumferential direction of the tyre (indicated with "C" in Fig. 4), preferably an orientation of an "alpha" angle (see Fig. 4) which ranges from about 0 to about -90 degrees, more preferably from about -30 to about -60 degrees, according to a specific embodiment of about -52°.

As can be seen in Fig. 2, the first orientation is different from the second orientation; in particular these two orientations are equal and opposite with respect to a circumferential direction of the tire (indicated with "C" in Fig. 4)

With reference to Fig. 2, the five ribs 21 and 22 and 23 have a width preferably between about 20 mm and about 70 mm, even more preferably between about 35 mm and about 55 mm, in a specific embodiment it is equal to about 45 mm.

Furthermore, the mutual distance between the aforementioned five ribs 21 and 22 and 23 (i.e. the width of the four deviating circumferential grooves) is preferably between about 2.5 mm and about 30 mm, even more preferably between about 15 mm and about 25 mm, in a specific embodiment it is equal to about 20 mm.

These dimensions as well as the number of ribs are not binding but only indicative.

Again in the example of Fig. 2, the circular gripping elements have a diameter of about 10 mm while the loboidal gripping elements have a length of about 30 mm and a width of about 10 mm and are inclined by about 50° with respect to a circumferential direction; these dimensions as well as the width of the angle are not binding but only indicative.

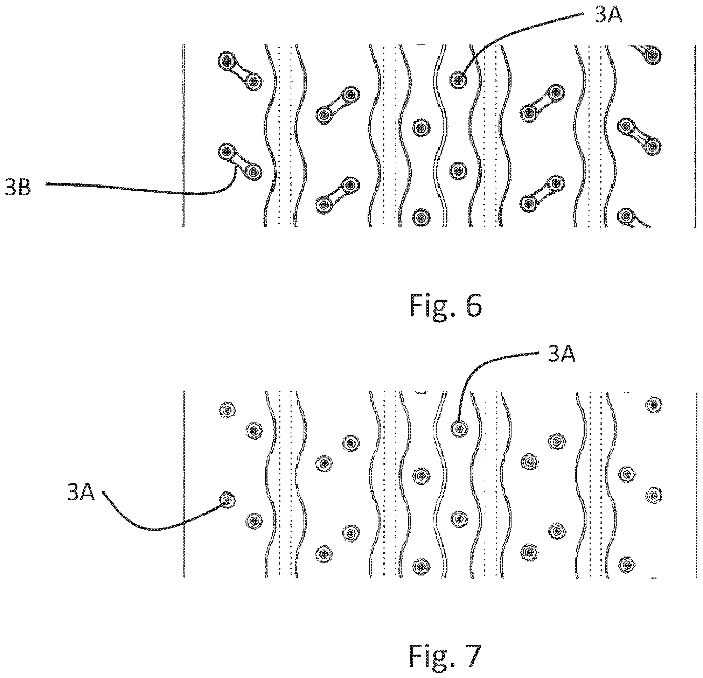

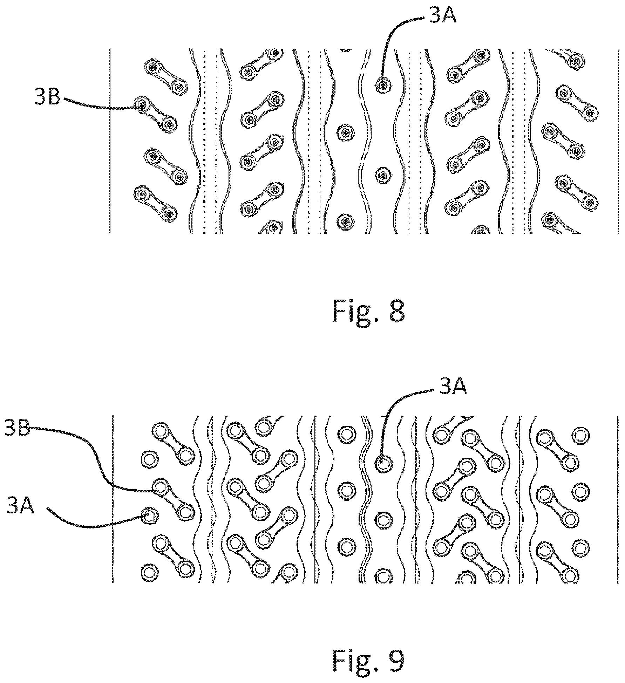

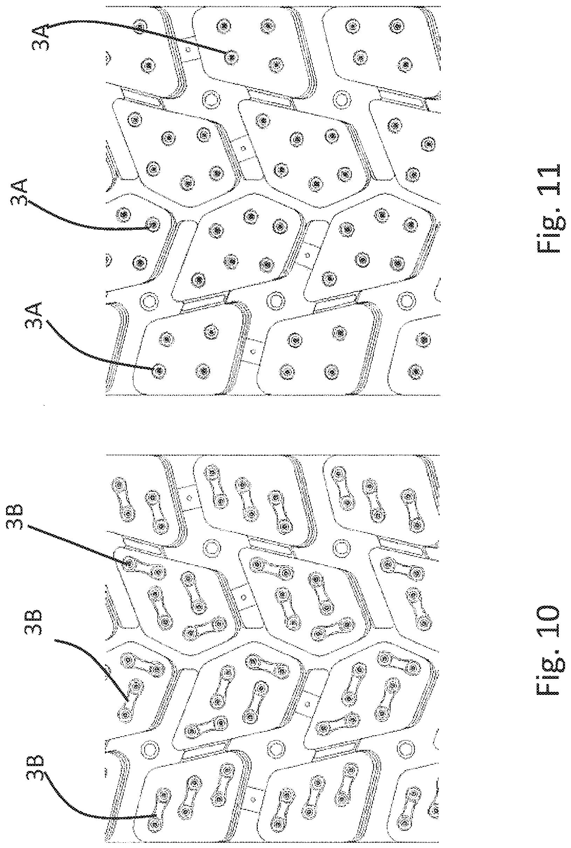

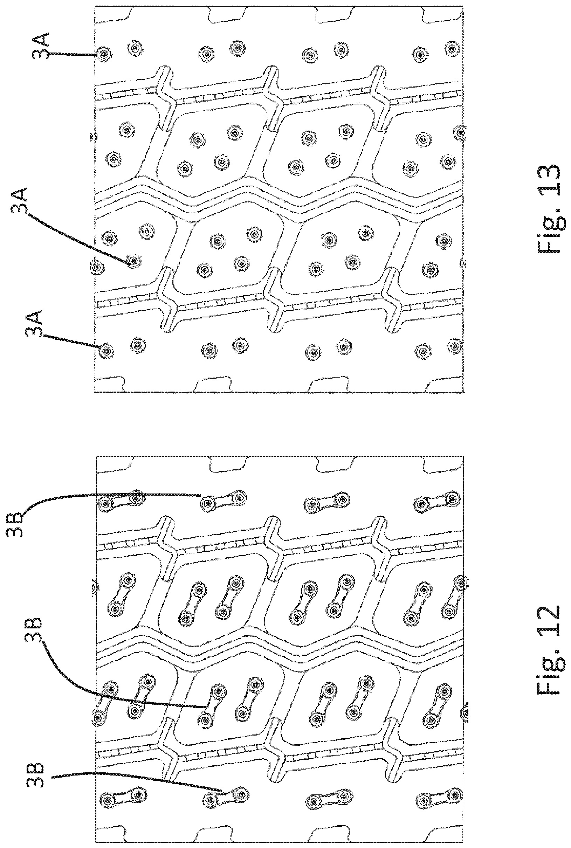

In the figures from Fig. 6 to Fig. 13, some possible configurations of the tyre tread according to the present invention are shown which employ convex-shaped gripping elements (for example like that of figures 3) and/or convex-shaped gripping elements, in particular loboidal (for example like that of Fig. 4).

## Claims

1. A tyre (1) for vehicle wheels, which comprises a tread band having a plurality of ribs (2) and/or blocks, wherein at least one gripping element (3) is formed on at least one of said ribs (2) and/or blocks, where said gripping element (3) is delimited by a notch (4A, 4B) having the development of a closed line at least partially curvilinear, and comprises one or more tread portions (5A, 5B), wherein said at least one tread portion (5A) has a hole (6) or a hollow inside,
**characterized in that** said hole (6) or hollow has a first conical-shape extreme zone (6A) and a second truncated conical-shape extreme zone (6B), wherein said first extreme zone (6A) and said second extreme zone (6B) have different inclinations in relation to the axis of said hole (6).

2. A tyre (1) according to claim 1, wherein said one or more tread portions (5A, 5B) are located inside the notch (4A, 4B).

3. A tyre (1) according to claim 2, wherein said notch (4A, 4B) has an outer contour (41) and said at least one tread portion (5A) is separated from said outer contour (41).

4. A tyre (1) according to any one of the preceding claims, wherein said closed line has a circular or elliptical or ovoid shape.

5. A tyre (1) according to any one of the preceding claims, wherein said closed line has a loboidal shape.

6. A tyre (1) according to claim 5, wherein said closed line has a first extreme lobe and a second extreme lobe and an intermediate taper.

7. A tyre (1) according to any one of the preceding claims, wherein said at least one tread portion (5A) has an outline corresponding to the shape of said closed line.

8. A tyre (1) according to any one of the preceding claims, wherein said hole (6) or hollow is deeper than a notch bottom (5A).

9. A tyre (1) according to any one of the preceding claims, wherein the inclination of said first extreme zone (6A) is less than the inclination of said second extreme zone (6B).

10. A tyre (1) according to any one of the preceding claims, in which said gripping element (3) comprises a plurality of tread portions (5A, 5B) adjacent to each other and located inside the notch (4B), in particular two or three or four tread portions (5A, 5B).

11. A tyre (1) according to claim 10, wherein said plurality of tread portions (5A, 5B) defines an outline and said outline corresponds to the shape of said closed line.

12. A tyre (1) according to any one of the preceding claims, in which a first plurality of gripping elements (3, 32) is formed on a first rib (2, 22).

13. A tyre (1) according to claim 12, wherein the gripping elements (3, 32) of said first plurality are equal to each other and have a same first orientation.

14. A tyre (1) according to claim 12 or 13, wherein a second plurality of gripping elements (3, 31, 33) is formed on a second rib (2, 21, 23).

15. A tyre (1) according to claim 13 and 14, wherein the gripping elements (3, 31, 33) of said second plurality are equal to each other and have a same second orientation, wherein said first orientation of the gripping elements (3, 31) of said first plurality is different from said second orientation of the gripping elements (3, 31) of said second plurality.

## Patentansprüche

1. Reifen (1) für Fahrzeugräder, der ein Laufflächenband umfasst, das eine Vielzahl von Rippen (2) und/oder Blöcken aufweist, wobei mindestens ein Grip-Element (3) auf mindestens einer der genannten Rippen (2) und/oder Blöcke ausgeformt ist, wobei das genannte Grip-Element (3) von einem Einschnitt (4A, 4B) begrenzt wird, der den Verlauf einer geschlossenen, mindestens teilweise gekrümmten Linie aufweist, und einen oder mehrere Laufflächenabschnitte (5A, 5B) umfasst, wobei der genannte mindestens eine Laufflächenabschnitt (5A) eine Öffnung (6) oder einen Hohlraum darin aufweist,
**dadurch gekennzeichnet, dass** die genannte Öffnung (6) oder der genannte Hohlraum einen ersten kegelförmigen Endabschnitt (6A) und einen zweiten kegelstumpfförmigen Endabschnitt (6B) aufweist, wobei der genannte erste Endabschnitt (6A) und der genannte zweite Endabschnitt (6B) im Verhältnis zu der Achse der genannten Öffnung (6) unterschiedliche Neigungen aufweisen.

2. Reifen (1) nach Anspruch 1, bei dem die genannten ein oder mehrere Laufflächenabschnitte (5A, 5B) im Inneren des Einschnittes (4A, 4B) untergebracht sind.

3. Reifen (1) nach Abschnitt 2, bei dem der genannte Einschnitt (4A, 4B) eine Außenkontur (41) aufweist und der genannte mindestens eine Laufflächenabschnitt (5A) von der genannten Außenkontur (41) getrennt ist.

4. Reifen (1) nach einem beliebigen der vorangegangenen Ansprüche, bei dem die genannte geschlossene Linie kreisförmig, elliptisch oder eiförmig ist.

5. Reifen (1) nach einem beliebigen der vorangegangenen Ansprüche, bei dem die genannte geschlossene Linie eine länglich-runde Form aufweist.

6. Reifen (1) nach Anspruch 5, bei dem die genannte geschlossene Linie einen ersten Endvorsprung und einen zweiten Endvorsprung und eine Verjüngung dazwischen aufweist.

7. Reifen (1) nach einem beliebigen der vorangegangenen Ansprüche, bei dem der genannte mindestens eine Laufflächenabschnitt (5A) einen der Form der genannten geschlossenen Linie entsprechenden Umriss aufweist.

8. Reifen (1) nach einem beliebigen der vorangegangenen Ansprüche, bei dem die genannte Öffnung (6) oder der genannte Hohlraum tiefer ist als eine Einschnittunterseite (5A).

9. Reifen (1) nach einem beliebigen der vorangegangenen Ansprüche, bei dem die Neigung des genannten ersten Endbereichs (6A) geringer ist, als die Neigung des genannten zweiten Endbereichs (6B).

10. Reifen (1) nach einem beliebigen der vorangegangenen Ansprüche, bei dem das genannte Grip-Element (3) eine Vielzahl von aneinander angrenzenden Laufflächenabschnitten (5A, 5B) umfasst, die in der Kerbe (4B) untergebracht sind, insbesondere zwei oder drei oder vier Laufflächenabschnitte (5A, 5B).

11. Reifen (1) nach Anspruch 10, bei dem die genannte Vielzahl von Laufflächenabschnitten (5A, 5B) einen Umriss definiert und der genannte Umriss der Form der genannten geschlossenen Linie entspricht.

12. Reifen (1) nach einem beliebigen der vorangegangenen Ansprüche, bei dem eine erste Vielzahl von Grip-Elementen (3, 32) auf einer ersten Rippe (2, 22) ausgeformt ist.

13. Reifen (1) nach Anspruch 12, bei dem die Grip-Elemente (3, 32) der genannten ersten Vielzahl gleich sind und die gleiche erste Ausrichtung aufweisen.

14. Reifen (1) nach einem beliebigen der Ansprüche 12 oder 13, bei dem eine zweite Vielzahl von Grip-Elementen (3, 31, 33) auf einer zweiten Rippe (2, 21, 23) ausgeformt ist.

15. Reifen (1) nach den Ansprüchen 13 und 14, bei dem die Grip-Elemente (3, 31, 33) der genannten zweite Vielzahl gleich sind und eine gleiche zweite Ausrichtung aufweisen, wobei die genannte erste Ausrichtung der Grip-Elemente (3, 31) der genannten ersten Vielzahl von der genannten zweiten Ausrichtung der Grip-Elemente (3, 31) der genannten zweite Vielzahl verschieden ist.

## Revendications

1. Pneu (1) pour roues de véhicule, qui comprend une bande de roulement ayant une pluralité de nervures (2) et/ou de blocs, dans lequel au moins un élément d'adhérence (3) est formé sur au moins l'une desdites nervures (2) et/ou blocs, où ledit élément d'adhérence (3) est délimité par une incision (4A, 4B) ayant le développement d'une ligné fermée au moins partiellement curviligne, et comprend une ou plusieurs parties de bande de roulement (5A, 5B), dans lequel ladite au moins une partie de bande de roulement (5A) a une ouverture (6) ou une cavité à l'intérieur de celle-ci,
**caractérisé en ce que** ladite ouverture (6) ou cavité comporte une première zone d'extrémité en forme conique (6A) et une seconde zone d'extrémité en forme de cône tronqué (6B), dans lequel ladite première zone d'extrémité (6A) et ladite seconde zone d'extrémité (6B) ont des inclinations différentes par rapport à l'axe de ladite ouverture (6).

2. Pneu (1) selon la revendication 1, dans lequel lesdites une ou plusieurs parties de bande de roulement (5A, 5B) sont situées à l'intérieur de l'incision (4A, 4B).

3. Pneu (1) selon la revendication 2, dans lequel ladite incision (4A, 4B) a un contour extérieur (41) et ladite au moins une partie de bande de roulement (5A) est séparée dudit contour (41).

4. Pneu (1) selon l'une quelconque des revendications précédentes, dans lequel ladite ligne fermée est de forme circulaire ou elliptique ou ovoïde.

5. Pneu (1) selon l'une quelconque des revendications précédentes, dans lequel ladite ligne fermée est en forme de lobe.

6. Pneu (1) selon la revendication 5, dans lequel ladite ligne fermée a un premier lobe d'extrémité et un second lobe d'extrémité et une cale biaisée intermédiaire.

7. Pneu (1) selon l'une quelconque des revendications précédentes, dans lequel ladite au moins une partie de bande de roulement (5A) comporte un profil correspondant à la forme de ladite ligne fermée.

8. Pneu (1) selon l'une quelconque des revendications précédentes, dans lequel ladite ouverture (6) ou cavité est plus profonde que le fond de l'incision (5A).

9. Pneu (1) selon l'une quelconque des revendications précédentes, dans lequel l'inclination de ladite première zone d'extrémité (6A) est inférieure à l'inclinaison de ladite seconde zone d'extrémité (6B).

10. Pneu (1) selon l'une quelconque des revendications précédentes, dans lequel ledit élément d'adhérence (3) comprend une pluralité de parties de bande de roulement (5A, 5B) adjacentes les unes aux autres et situées à l'intérieur de l'incision (4B), notamment deux ou trois ou quatre parties de bande de roulement (5A, 5B).

11. Pneu (1) selon la revendication 10, dans lequel ladite pluralité de parties de bande de roulement (5A, 5B) définissent un profil et ledit profil correspond à la forme de ladite ligne fermée.

12. Pneu (1) selon l'une quelconque des revendications précédentes, dans lequel une première pluralité d'éléments d'adhérence (3, 32) sont formés sur une première nervure (2, 22).

13. Pneu (1) selon la revendication 12, dans lequel les éléments d'adhérence (3, 32) de ladite première pluralité sont égaux les uns aux autres et ils ont une première même orientation.

14. Pneu (1) selon la revendication 12 ou 13, dans lequel une seconde pluralité d'éléments d'adhérence (3, 31, 33) sont formés sur une seconde nervure (2, 21, 23).

15. Pneu (1) selon les revendications 13 et 14, dans lequel les éléments d'adhérence (3, 31, 33) de ladite seconde pluralité sont égaux les uns aux autres et ils ont une seconde même orientation, dans lequel ladite première orientation des éléments d'adhérence (3, 31) de ladite première pluralité est différente de ladite seconde orientation des éléments d'adhérence (3, 31) de ladite seconde pluralité.
